# EUROPEAN PATENT APPLICATION

(11) **EP 3 683 708 A1**
(43) Date of publication of application: **22.07.2020**
(21) Application number: 19305045.7
(22) Date of filing: 15.01.2019
(51) Int. Cl.: G06F 21/62, G06F 9/455, G06F 21/77, G06F 8/65

(54) **METHOD FOR MANAGING A PACKAGE OF AN APPLICATION**

(71) Applicant: Thales Dis France SA, 92190 Meudon (FR)
(72) Inventor: PHAN, Guillaume Chi-Dan, 13881 GEMENOS CEDEX (FR)
(74) Representative: Grevin, Emmanuel

(57) **Abstract**

The invention is a method for managing a package (12) of an application in a hardware device (10) comprising a registry (60). The hardware device is intended to comprise first and second separate logical containers (81, 82). The method comprises the following steps:
- receiving a load command (30) aiming at loading the package in said second container,
- retrieving from said load command a package identifier and looks for a first entry (61) comprising said package identifier in the registry,
- creating in the registry a second entry (62) comprising said package identifier, an identifier of the second container and a reference,
- only if the first entry has been found, the reference is set to a shared executable code (70) already referenced by the first entry, else the hardware device stores a shared executable code belonging to said package and sets the reference to said shared executable code.

## Description

### (Field of the invention)

The present invention relates to methods of managing a package of an application. It relates particularly to methods of managing packages installed in a hardware device.

### (Background of the invention)

Secure elements can be small devices comprising a memory, a microprocessor and an operating system for computing treatments. Such secure elements may comprise a plurality of memories of different types, like non-volatile memory and volatile memory. They are called "secure" because they are able to control the access to the data they contain and to authorize or not the use of data by other machines or entities. Secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards, embedded secure element (eSE) and integrated secure element (iSE), SIM and universal integrated circuit card (UICC) are a kind of secure elements.

An application intended to be installed on a secure element may be developed as a package (or a set of packages) which is stored into the secure element. Typically a Java Card^{tm} applet can be handled through several classes defined in one or several packages.

In a Java Card implementation (i.e. card hereafter), an application package is identified by an AID (Application IDentifier). This AID uniquely identifies a package on a card which usually makes it impossible to load two packages with the same AID on the same card. However, some implementations introduced the concept of separate logical containers (e.g. folders, profiles, name spaces) where packages with the same AID may be loaded. In this case, it is assumed that such containers are not logically active at the same time. For example, such a concept is introduced by GSMA SGP.22 which describes a card (eUICC) where separate profiles may be created and where packages with the same AID may be loaded in each profile.

It may happen that the exact same package (same AID, same Executable Code) is loaded on the card in multiple separate containers. In such cases, the memory space is consumed proportionally to store exactly the same thing.

There is a need to improve management of package in a secure element to save memory.

### Summary of the Invention)

The invention aims at solving the above mentioned technical problem.

An aspect of the present invention is a method for managing a package of an application in a hardware device comprising a processing unit, a registry and a virtual machine able to execute said application. The hardware device is intended to comprise at least first and second separate logical containers. The method comprises a step of receiving by the hardware device a load command aiming at loading the package in said second container. The method comprises the following steps:
- the hardware device retrieves from said load command a package identifier of said package and looks for the presence in the registry of a first entry comprising said package identifier,
- the hardware device creates a second entry in the registry, the second entry comprising said package identifier, an identifier of the second container and a reference,
- only if the first entry has been found, the reference is set to a shared executable code already referenced by the first entry,
- only if the first entry has not been found, the hardware device stores a shared executable code belonging to said package and sets the reference to said shared executable code.

Advantageously, the package identifier may be a digest computed from a binary representation of said package.

Advantageously, the hardware device may read the digest in the load command.

Advantageously, the hardware device may compute said digest from said package.

Advantageously, the package identifier may be the AID of the package.

Advantageously, the load command may comprise the package identifier and may be devoid of executable code.

Advantageously, the hardware device may be a secure element. In particular, the secure element may be a SIM, a UICC, a eUICC, an iUICC or a smart card.

Another aspect of the present invention is a hardware device including an Operating System, a processing unit, a registry and a virtual machine able to execute an application. The hardware device is intended to comprise first and second separate logical containers. The hardware device is able to receive a load command aiming at loading a package of said application in said second container. The hardware device is configured to retrieve from said load command a package identifier of the package and to look for the presence in the registry of a first entry comprising the package identifier. The hardware device is configured to create a second entry in the registry, the second entry comprising the package identifier, an identifier of the second container and a reference. Only if the first entry has been found, the hardware device is configured to set the reference to a shared executable code already referenced by the first entry. Only if the first entry has not been found, the hardware device is configured to store a shared executable code belonging to the package and to set the reference to the shared executable code.

Advantageously, the hardware device may be configured to read the digest in the load command.

Advantageously, the hardware device may be configured to compute the digest from the package.

Advantageously, the hardware device may be a secure element like a SIM, a UICC, a eUICC, an iUICC or a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a functional architecture of a hardware device according to an example of the invention,
- Figure 2 depicts schematically two entries sharing a same executable code in the package registry according to an example of the invention,
- Figure 3 depicts schematically an architecture of a hardware device according to an example of the invention, and
- Figure 4 show a flow diagram of package management according to an example of the invention.

### (Detailed description of the preferred embodiments)

The invention may apply to any type of application intended to be installed on a hardware device through package mechanism. Such hardware device can be a smartphone, a tablet, a personal computer, a smart watch, a vehicle, a meter, a slot machine, a TV, a computer or a secure element for example.

The invention is well suited for secure elements comprising a virtual machine like a Java Card® virtual machine for example. Such secure elements may be coupled to a host machine like a smartphone, a tablet, a personal computer, a smart watch, a vehicle, a meter, a slot machine, a TV or a computer for example.

In the present description, the word package means a set of individual files, data or resources which are packed together as a software collection that provides certain features or services. For instance a package may contain executable code and static parameters. All installed packages are registered in a unique package registry.

The invention applies to packages as defined in object-oriented programming languages (like Java® for instance).

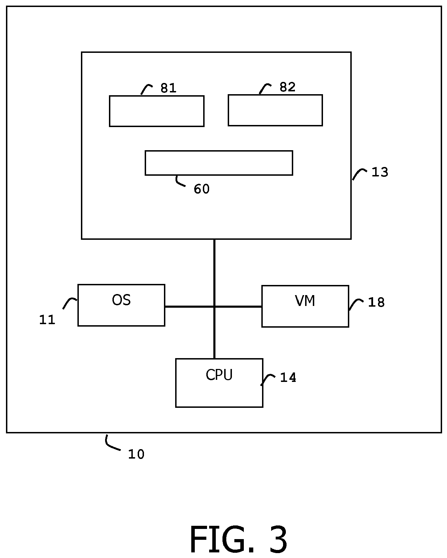

Figure 3 shows schematically the architecture of a hardware device according to an example of the invention.

In this embodiment, the hardware device 10 is a secure element like a UICC (Universal Integrated Circuit Card) intended to be embedded in a hosting machine like a mobile phone for example.

The secure element 10 includes a processing unit (CPU) 14, an operating system (OS) 11, a Java Card virtual machine (VM) 18 and a storage area 13. The Java Card virtual machine 18 is designed to execute software applications expressed in intermediate code like bytecode. The storage area 13 can comprise a volatile part and a non-volatile part. In this example, the non-volatile part of the storage area 13 comprises a package registry 60 and two isolated logical containers 81 and 82. Containers 81 and 82 are separate logical containers.

Only one separate logical container can be active at a time. Content of inactive logical containers is not reachable. As a consequence, active containers can neither see nor request to interact with data and applications of inactive containers.

In one embodiment, logical containers may be isolated if their access rights are independently managed. Their access rights may be granted independently to users, software components and applications.

The secure element 10 also includes a physical communication interface (not shown) allowing to exchange data with the hosting machine or a remote machine.

The hardware device comprises a first set of software instructions, that when executed by the processing unit 14, causes the hardware device 10 to retrieve from a received load command a package identifier 32 of a package and to look for the presence in the registry 60 of an entry comprising the package identifier.

The hardware device comprises a second set of software instructions, that when executed by the processing unit 14, causes the hardware device to create a new entry in the registry 60, the new entry comprising the package identifier, an identifier 624 of the second container 82 and a reference 622.

The hardware device comprises a third set of software instructions, that when executed by the processing unit 14, causes the hardware device to set the reference 622 to a shared executable code 70 already referenced by the previous entry only if an entry comprising the same package identifier has been found.

The hardware device comprises a fourth set of software instructions, that when executed by the processing unit 14, causes the hardware device to store a shared executable code belonging to the package and to set the reference 622 to the shared executable code only if no entry comprising the same package identifier has not been found.

In one embodiment, the hardware device comprises a fifth set of software instructions, that when executed by the processing unit 14, causes the hardware device to read a digest in the received load command.

In another embodiment, the hardware device comprises a fifth set of software instructions, that when executed by the processing unit 14, causes the hardware device to compute a digest from the package received in a load command.

In both embodiments, the digest can be computed by applying a hash function to the Executable Load File (ELF) of the package conveyed by the load command. The ELF is the actual data representing the package to be loaded. For instance the digest can be generated by using a Secure Hash Algorithm like SHA-256.

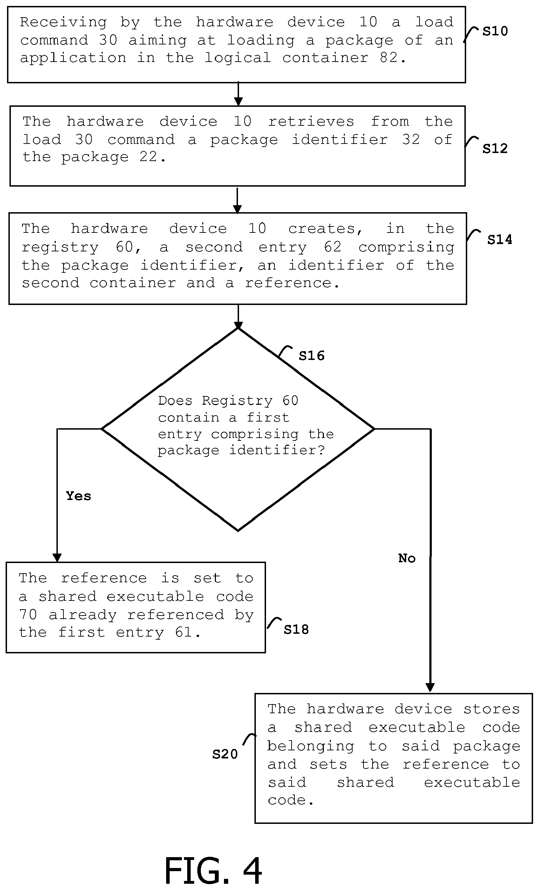

Figure 4 shows an example of flow diagram of package management according to an aspect of the invention.

At step S10, the hardware device 10 (similar to that presented at Figure 3) receives a load command 30 which aims at installing the package 22 of an application in the container 82. Depending on the size of the data to be transmitted, the load command 30 may consist of one or more successive messages.

In one embodiment, the load command 30 contains a binary representation of the package 22. The binary representation includes an executable code 70. Preferably, the executable code is bytecode runnable by the Virtual Machine 18 embedded in the secure element 10.

At step S12, the hardware device 10 retrieves, from the received load command 30, a package identifier 32 of the package 22. In one embodiment, the load command 30 includes the package identifier 32 and the hardware device 10 reads the package identifier 32 in the received load command 30. Alternatively, the hardware device extracts data from the received load command 30 then computes the package identifier 32 from the extracted data. In the two above-presented embodiments, the package identifier 32 can be either the AID of the package or a digest computed from the binary representation of the package 22. The binary representation is assumed to include an executable code 70 of the package. ISO/IEC 7816-4 section 8.2.1.2 defines AID as Application Identifier. By extension, it can designate an Application Package or an Application Instance created from that package.

Then at step S14, the hardware device 10 creates a new entry 62 in the registry 60. The new entry 62 is allocated to the package 22. The new entry 62 comprises the package identifier 32, an identifier CID₈₂ of the container 82 and a reference 622.

At step S16, the hardware device 10 checks whether the registry 60 contains another entry comprising the same the package identifier 32.

If and only if no other entry comprising the same package identifier 32 was found in the registry 60, then the hardware device 10 stores the executable code 70 of the package 22 in the storage area 13 and sets the reference 622 (of the entry 62) to the executable code 70. In other words, the reference 622 contains a link to the executable code 70.

If and only if another entry comprising the same the package identifier 32 was found in the registry 60, then the hardware device 10 sets the reference 622 (of the entry 62) to the shared executable code 70 (also named shared executable code) already referenced by the found entry.

Although described as distinct steps, the steps S14, S16 and S18 (or S20) could be performed as a single step.

Let's assume the entry 61 is present in the registry 60. In a variant of the invention, the load command may comprise only the package identifier 32 (i.e. the load command 30 can be devoid of executable code of the package 22). The hardware device 10 creates the new entry 62 corresponding to the package 22 installed in the container 82 by executing steps S10 to S18 of Figure 4.

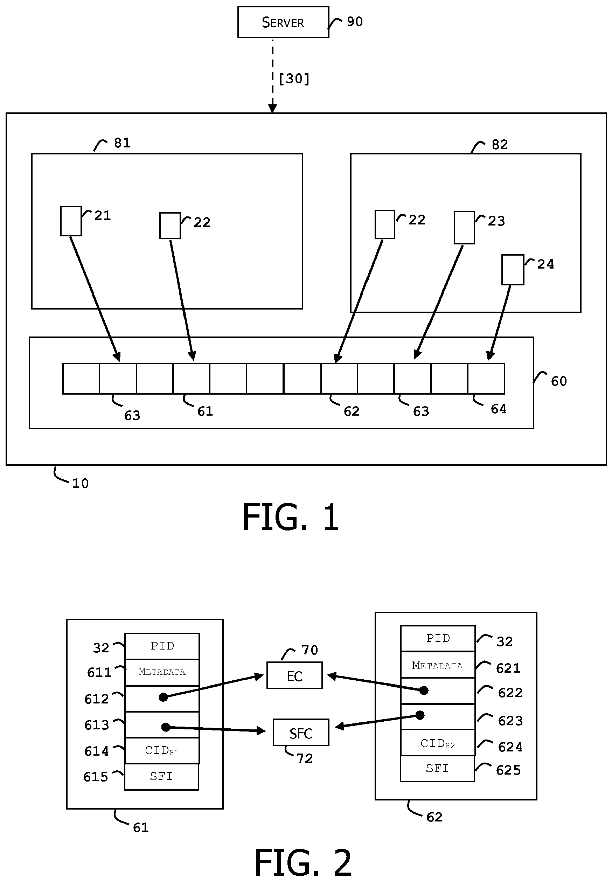

Figure 1 shows schematically the functional architecture of a hardware device according to an example of the invention.

In this embodiment, the hardware device 10 is a secure element having an architecture similar to that presented at Figure 3. The hardware device 10 is in a state corresponding to the end of the execution of the step S18 described at Figure 4.

A remote server 90 (or any relevant distant or local hardware/software device) is supposed to have sent the load command 30 to the secure element 10. For instance, the load command can be conveyed through OTA (Over-The-air) using Telecom communication protocols (i.e. remote connection) or via a local connection.

Preferably, the load command 30 is protected by usual security mechanisms providing confidentiality and integrity.

In one embodiment, the load command 30 includes a binary representation of a package of an application. Preferably, the load command convey a load file which is a Java Card CAP (Converted APlet) file.

The hardware device 10 comprises a package registry 60 and two separate logical containers 81 and 82.

Each of said containers can be either in an activated state or in a disabled state. Only one of the containers can be in activated state at any given time.

Each of said containers is an independent logical area. In this example, the logical containers are implemented through the security domain mechanism as defined by Card Specifications of GlobalPlatfom ® V2.2 standard. Alternatively, the logical containers may be implemented using mechanisms provided by the underlying hardware platform or based on a purely software implementation.

Advantageously, each container may be dedicated to a subscription. In this case, a container comprises all elements which correspond to the subscription. These elements may be any combination of a set of applications, a set of secret data, a set of applicative data, a set of administration data, a set of files structured in a file system, etc. For instance the container 81 may correspond to a Telecom subscription and the container 82 may correspond to a Banking subscription. In another example, the container 81 may correspond to a professional Telecom subscription and the container 82 may correspond to a private Telecom subscription with the same Mobile Network Operator. In this case both subscriptions are assumed to comprise many identical elements.

The logical containers may be implemented through any logical or physical mechanism which allows identifying a set of elements that are managed thank to common rules.

Two packages 21 and 22 have been installed in the container 81 of Figure 1. Consequently, two entries have been created in the package registry 60: an entry 63 associated to the package 21 and an entry 61 associated to the package 22 of the container 81.

Three packages 22, 23 and 24 have been installed in the container 82 of Figure 1. Consequently, three entries have been created in the package registry 60: an entry 62 associated to the package 22 (of the container 82), an entry 63 associated to the package 23 and an entry 64 associated to the package 24.

It is to be noted that the same package 22 has been installed twice in the hardware device 10: a first instance in the container 81 and a second instance in the container 82.

Figure 2 shows schematically two entries sharing a same executable code in the package registry 60 according to an example of the invention.

The entries 61 and 62 belong to the registry 60. The entry 61 is associated to the package 22 of the container 81 while the entry 62 is associated to the package 22 of the container 82. Each entry comprises several fields.

The entry 61 comprises a package identifier 32 of the package 22. In a variant of the invention, the package identifier 32 is a digest computed from the initial binary representation of the package 22.

In another variant of the invention, the package identifier 32 is the AID of the package 22.

The entry 61 comprises metadata 611 of the package 22. For instance, the metadata 611 can include the AID of the package 22 and/or the maximum amount of memory that may be used by the package 22. Note that such threshold may be different for each container.

The entry 61 comprises a first reference 612 pointing to a shared executable code 70. The shared executable code 70 is the executable code belonging to the initial binary representation of the package 22.

The entry 61 comprises a second reference 613 pointing to a shared Static Field Component (SFC) 72. The shared SFC 72 is the Static Field Component belonging to the initial binary representation of the package 22. The SFC provides initial values for the static fields of the package 22. The set of current values of the static fields is named Static Field Image.

The entry 61 comprises an identifier 614 of the container in which the package has been installed. In this example, the identifier 614 comprises the value (noted CID₈₁) of the identifier of the container 81.

The entry 61 comprises a field 615 comprising a copy of the Static Field Image (SFI) of the instance of the package 22 created in the container 81. The Static Field Image is assumed to have been initialized with the content of the shared Static Field Component (SFC) 72.

The entry 62 comprises the package identifier 32 of the package 22. Since the same package 22 has been installed in both containers 81 and 82, the entries 61 and 62 comprise the same package identifier value.

The entry 62 comprises metadata 621 of the package 22. For instance, the metadata 621 can include the AID of the package 22 and/or the maximum amount of memory that may be used by the package 22 in the container 82.

Metadata are not part of the received binary representation of the package (which includes the executable code) and are provided separately via the load command 30.

The entry 62 comprises a first reference 622 pointing to the shared executable code 70. The executable code 70 is shared between all instances of the package 22.

The entry 62 comprises a second reference 623 pointing to the shared Static Field Component (SFC) 72. The SFC 72 is shared between all instances of the package 22.

The entry 62 comprises an identifier 624 of the container in which the package has been installed. In this example, the identifier 624 comprises the value (noted CID₈₂) of the identifier of the container 82.

The entry 62 comprises a field 625 comprising a copy of the Static Field Image (SFI) of the instance of the package 22 created in the container 82. The SFI is assumed to have been initialized with the content of the shared Static Field Component 72.

Starting from the state of the hardware device described at Figures 1 and 2, if an attempt to delete the package 22 of the container 81 is made, the hardware device 10 checks whether the associated package identifier 32 (ex: digest) is associated with another entry in the registry 60. If so, the entry 61 (corresponding to the instance of the package 22 in the container 81) is deleted but the shared Executable Code 70 and the shared Static Field Component 72 are kept unchanged. Else, the entry 61, the shared Executable Code 70 and the shared SFC 72 are deleted.

In one embodiment, there is no storage of the shared SFC 72 (and no corresponding reference in entries of the registry). The SFC is received by the hardware device 10 with the load command 30, used to initialize the SFI then discarded.

In one embodiment, the load command 30 is devoid of ELF (Executable Load File) which is the binary representation of package. Thus the load command 30 neither includes Executable Code nor Static Field Component. For example, the load command 30 may comprise the package identifier (e.g. digest or package AID) only. If the received package identifier matches one of a package registry entry bound to another container, this is considered enough to create a new package registry entry representing the same package without ELF (Executable Load File) sending. This embodiment requires storing a shared SFC which is used to initialize the SFI of the new installed instance of package.

In another example, the load command 30 may comprise the digest and the package AID only. If both match those of a package registry entry bound to another container, this is considered enough to create a new registry entry representing the same package without ELF sending.

The first time a package is loaded into the hardware device 10, the installation of the shared executable code 70 is followed by a step of linking the shared executable code 70 to the underlying operating system.

Thanks to the invention, the second time a package is loaded into the hardware device 10 (in another logical container), there is no linking step since the shared executable code 70 is already linked. The same goes for the subsequent loading of the same package into other containers. Consequently, the total time of loading and installing the package is reduced compared to the first time.

The invention is well-suited for storing packages requiring a large amount of memory in hardware devices.

The invention is not limited to the described embodiments or examples. In particular, the hardware device may comprise a plurality of different packages installed in a large number of logical containers. The virtual machine may be different from a Java Card VM.

The hardware device can be a secure element like a SIM card, a UICC, an eUICC (embedded-UICC), an iUICC (integrated-UICC) or a smart card.

## Claims

1. A computer-implemented method for managing a package (12) of an application in a hardware device (10) comprising a processing unit (14), a registry (60) and a virtual machine (18) able to execute said application, said hardware device being intended to comprise first and second separate logical containers (81, 82), the method comprising a step of receiving by the hardware device a load command (30) aiming at loading the package in said second container, **characterized in that** the method comprises the following steps:
- the hardware device retrieves from said load command a package identifier (32) of said package and looks for the presence in the registry of a first entry (61) comprising said package identifier,
- the hardware device creates a second entry (62) in the registry, the second entry comprising said package identifier, an identifier (624) of the second container and a reference (622),
- only if the first entry has been found, the reference is set to a shared executable code (70) already referenced by the first entry,
- only if the first entry has not been found, the hardware device stores a shared executable code belonging to said package and sets the reference to said shared executable code.

2. The method according to claim 1, wherein said package identifier is a digest computed from a binary representation of said package.

3. The method according to claim 2, wherein the hardware device reads said digest in said load command.

4. The method according to claim 2, wherein the hardware device computes said digest from said package.

5. The method according to claim 1, wherein said package identifier is an AID of said package.

6. The method according to claim 1, wherein said load command comprises said package identifier and is devoid of executable code.

7. The method according to claim 1, wherein said hardware device is a secure element.

8. The method according to claim 7, wherein said secure element is a SIM, a UICC, a eUICC, an iUICC or a smart card.

9. A hardware device (10) including an Operating System (11), a processing unit (14), a registry (60) and a virtual machine (18) able to execute an application, said hardware device being intended to comprise first and second separate logical containers (81, 82), said hardware device being able to receive a load command (30) aiming at loading a package of said application in said second container, **characterized in that** the hardware device is configured to retrieve from said load command a package identifier (32) of said package and to look for the presence in the registry of a first entry (61) comprising said package identifier, **in that** the hardware device is configured to create a second entry (62) in the registry, the second entry comprising said package identifier, an identifier (624) of the second container and a reference (622), **in that**, only if the first entry has been found, the hardware device is configured to set the reference to a shared executable code (70) already referenced by the first entry, and **in that**, only if the first entry has not been found, the hardware device is configured to store a shared executable code belonging to said package and to set the reference to said shared executable code.

10. The hardware device according to claim 9, wherein said package identifier is a digest computed from a binary representation of said package.

11. The hardware device according to claim 10, wherein the hardware device is configured to read said digest in said load command.

12. The hardware device according to claim 10, wherein the hardware device is configured to compute said digest from said package.

13. The hardware device according to claim 9, wherein said package identifier is an AID of said package.

14. The hardware device according to claim 9, wherein said load command comprises said package identifier and is devoid of executable code.

15. The hardware device according to claim 8, wherein said hardware device is a secure element like a SIM, a UICC, a eUICC, an iUICC or a smart card.
